# EUROPEAN PATENT SPECIFICATION

(11) **EP 3 047 164 B1**
(45) Date of publication and mention of the grant of the patent: **27.02.2019**
(21) Application number: 14845136.2
(22) Date of filing: 11.09.2014
(51) Int. Cl.: F16B 39/22, B60R 19/52, E05F 5/02, F16F 7/00

(54) **INSULATOR WHICH IS ADJUSTABLE AND CAN DEAL WITH IMPACTS AND VIBRATIONS**
EINSTELLBARER ISOLATOR MIT BEWÄLTIGUNG VON STÖSSEN UND ERSCHÜTTERUNGEN
ISOLATEUR QUI EST RÉGLABLE ET PEUT GÉRER LES IMPACTS ET LES VIBRATIONS

(30) Priority: 17.09.2013 SE 1351063
(43) Date of publication of application: 27.07.2016
(73) Proprietor: Scania CV AB, 151 87 Södertälje (SE)
(72) Inventor: PASIC, Anel, S-163 71 Spånga (SE)
(74) Representative: Scania CV AB
(86) International application number: PCT/SE2014/051044
(87) International publication number: WO 2015/041585

(56) References cited:
- GB-A- 830 722
- JP-A- H0 719 228
- JP-A- H0 914 250
- JP-A- 2007 162 733
- US-A- 2 850 064
- US-A- 2 904 820

## Description

### Field of the invention

The present invention relates to an insulator according to the preamble of the independent claim which is adjustable and can deal with impacts and vibrations.

### Background to the invention

There are many different ways of absorbing impacts and/or vibrations which may occur between two units and within the units themselves. It is for example possible to place between a vehicle's radiator grille and bodywork an insulator which prevents the grille and the bodywork from being subject to wear because the grille strikes the bodywork when being closed, or by vibrations which occur when the vehicle is in motion.

The tolerance between the radiator grille and the bodywork may be different on different vehicles, which means that the insulator may need to be adapted to the prevailing tolerance during assembly of the vehicle. Effecting the adaptation needs to be easy and quick, to facilitate the work of fitting the insulator and the grille.

The insulator may be fastened to the bodywork by, for example, a threaded connection. However, the threaded connection will be subject to vibrations which occur when the vehicle is in motion, so the connecting nut may well work loose from the connecting screw. One way of securing the threaded connection is to use a locknut which locks the nut firmly to the screw thread. The various kinds of locknuts use different kinds of locking characteristics. For example, CN100376810C refers to an kind of locknut embedded in rubber which is compressed during use in order to be usable with tight contact while at the same time protecting the parts connected together. CN200985942Y refers to a nut and disc covered with rubber to achieve a tight connection. The nut is elastically deformable to achieve a self-locking function. In other examples a resilient lock washer or a further plastic covering is used to achieve greater frictional torque.

Fitting a locknut does however involve using a special tool, which means that any adaptation of the threaded connection will be advanced, time-consuming and in some cases not ergonomic for fitters.

From a different technical field, patent document GB 830,722 A discloses a sealing nut comprising a threaded unit which has running through it a hole with a diameter intended to accommodate a corresponding threaded rod, wherein the sealing unit comprises also a sealing unit made of elastic material and having at one end a hole with a diameter, which sealing unit is secured to the threaded unit so that the threaded hole running through the unit and the hole in the sealing unit are connected, in which the sealing unit at least partly runs over the outer circumference of the threaded unit, wherein the threaded unit is embedded in the sealing unit by curing.

It is therefore an object of the invention to propose an alternative insulator which allows easy adaptation to different tolerances and can withstand impacts and/or vibrations.

### Summary of the invention

The object described above is at least partly achieved by an insulator according to the independent claim.

The fact that diameter d₂ is smaller than diameter d₁ results in a thread locking mechanism in the insulator such that the position of the insulator on the threaded rod during any vibrations etc. may be secure while still allowng manual adjustment of its position thereon. Adjusting the insulator's position becomes more economic for a fitter to effect, since it does not involve handling any kind of tool in an environment where the space is limited. The fact that no tool is required also means that time can be saved in fitting the insulator.

Preferred embodiments are described in the dependent claims and the detailed description.

### Brief description of the attached drawings

The invention is described below with reference to the attached drawings, in which:
Fig. 1 depicts the front of a truck with a radiator grille partly lowered.
Fig. 2 depicts an insulator according to the invention fitted to the vehicle's bodywork.
Fig. 3 illustrates how the insulator can be fitted to the vehicle's bodywork via a mounting with a screw.
Fig. 4A depicts the insulator according to an embodiment of the invention.
Fig. 4B depicts a cross-section of the insulator in Fig. 4A along A-A.
Fig. 4C depicts a cross-section of an insulator according to another embodiment of the invention.

### Detailed description of preferred embodiments of the invention

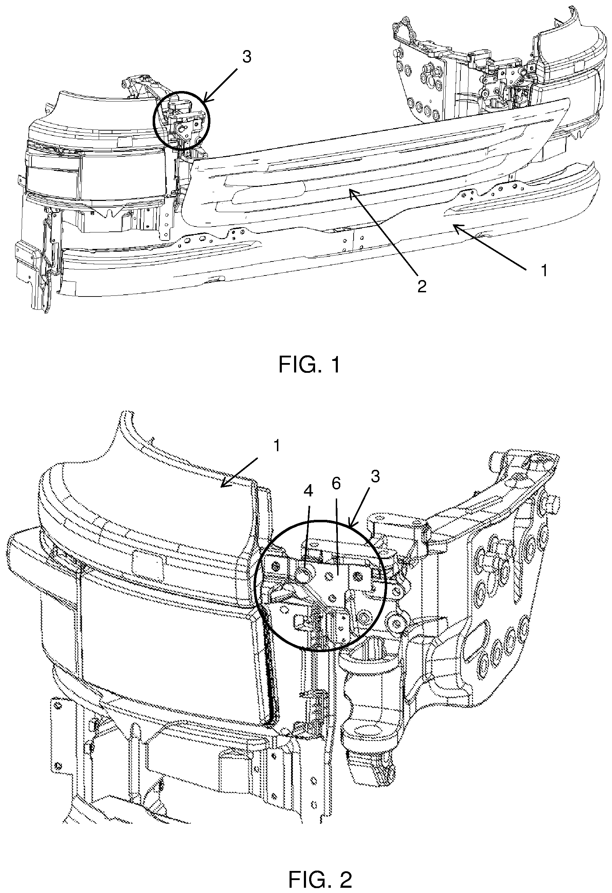

Fig. 1 depicts part of the front 1 of a vehicle, here a truck, with a radiator grille 2 shown partly lowered. The grille is used to protect the air intake to the vehicle's radiator from dirt, road dust and foreign objects. In the version depicted in Fig. 1 the grille is fitted suspended from the vehicle's bodywork so that it can be opened and closed and thus provide easy access to the air intake etc., e.g. for cleaning.

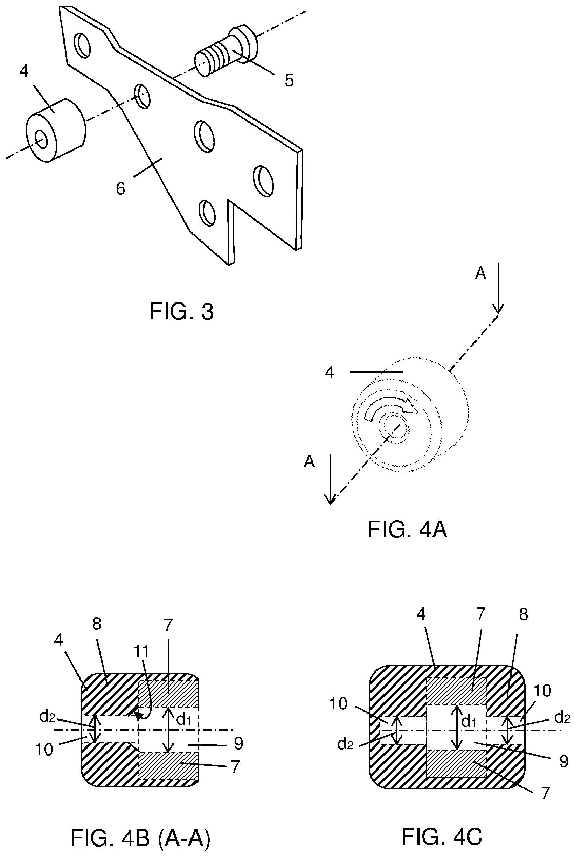

It is important that fitting the radiator grille 2 be quick and easy. It has to be fitted in such a way that in its closed state it rests against the bodywork in a stable way which reduces the risk of impacts and/or vibrations between grille and bodywork. Fig. 2 is an enlarged view of part of the vehicle's front 1, showing which part of the bodywork the grille has to rest against. The circled portion 3, which also appears in Fig. 1, depicts a mounting which connects two different body parts. The mounting 6 takes here the form of a flat piece of metal with fitting holes running through it. An insulator 4 against which the grille 2 is to rest in its closed state is fastened to the mounting 6. The insulator 4 will now be described in more detail with reference to Figures 3-4C. It should be noted that the insulator application illustrated in Figures 1-2 is merely one example and that the insulator has a broad area of application beyond what is here described.

Fig. 3 depicts an unattached mounting 6 to which the insulator 4 is fitted by means of a threaded rod 5, here a screw 5. The screw 5 is inserted through a hole in the mounting, and the insulator is screwed firmly to the screw by means of a corresponding threaded hole in the insulator. By screwing the insulator it is thus possible to adjust subsequently the distance from the mounting at which the insulator is to be situated, i.e. the insulator's intended position on the screw.

Fig. 4A depicts an embodiment of the insulator 4 which has an arrow on one side to mark the direction in which the insulator has to be rotated relative to the threaded rod 5 in order to be screwed on.

Fig. 4B depicts a cross-section of the insulator 4 along the line A-A (Fig. 4A) according to an embodiment of the insulator. The insulator comprises a threaded unit 7 with a hole 9 running through it with a diameter d₁ intended to accommodate the corresponding threaded rod 5, which may be a screw (Fig. 3). The insulator comprises also a buffer unit 8 made of elastic material which has at one end a hole 10 with a diameter d₂. The buffer unit 8 is secured to the threaded unit 7 so that the threaded hole 9 running through the threaded unit and the hole 10 in the buffer unit are connected. As may be seen in Fig. 4B, the diameter d₂ of the hole in the buffer unit is smaller than the diameter d₁ in the threaded unit. When the insulator is screwed onto the threaded rod 5, the rod will first be screwed through the threaded hole 9 in the unit 7 before continuing into the hole 10 with the smaller diameter d₂ in the buffer unit. The diameter d₂ is thus smaller than the diameter d₁ of the hole 9 in the threaded unit, and hence also smaller than the diameter of the threaded rod 5. The inside surface of the buffer unit in conjunction with the extent of the hole 10 will thus enclose the threads on the threaded rod 5 and slow down the screwing of the insulator. The insulator will thus serve as a thread locking mechanism. Adapting diameter d₂ to diameter d₁ makes it possible to achieve a suitable inertia so that a fitter can adjust the insulator by hand but the insulator will remain on the rod when the insulator and the threaded rod vibrate or are subject to impacts. In Figures 4A and 4B the hole 10 runs right through the buffer unit, which inter alia facilitates the manufacture of the insulator.

Fig. 4C depicts another embodiment of the insulator 4, in which the hole 10 does not run all the way through but only a short distance into the buffer unit 8. The buffer unit also surrounds all sides of the threaded unit 7 and defines the hole 10 on both sides round the hole 9 in the threaded unit. Here again the diameter d₂ of the hole 10 in the buffer unit is smaller than the diameter d₁ of the hole in the threaded unit, thus making a thread locking mechanism possible on both sides of the hole 9 in the threaded unit.

In the two embodiments depicted in Figures 4B and 4C the hole 10 in the buffer unit and the threaded hole 9 running through the threaded unit are concentric. The centrelines of the holes therefore coincide. To create the thread locking mechanism, the diameter d₂ of the hole in the buffer unit will in one embodiment be at least one 1 mm smaller than the diameter d₁ of the hole in the threaded unit, e.g. 1.5, 2, 2.5, 3, 3.5 or 4 mm smaller. In one example the threaded rod 5 is a so-called M8 screw. The diameter d₁ of the hole 9 in the threaded unit will then be 8 mm and the diameter d₂ of the hole in the buffer unit may be 4-7 mm to create a thread locking mechanism. It should be noted that no part of the buffer unit will be inside the hole 9 in the threaded unit.

In the two embodiments depicted in Figures 4B and 4C the buffer unit 8 runs over the outer circumference of the threaded unit 7. This enables the threaded unit 7 to be held firmly by, and thus be secured to, the buffer unit. The outside diameter of the buffer unit in this embodiment is larger than that of the threaded unit, e.g. 0.5, 1, 1.5 or 2 mm larger. The buffer unit can thus cover the outer circumference of the threaded unit. If for example the outside diameter of the threaded unit is 24 mm, that of the buffer unit may be 25 mm. The buffer unit will thus cover the outer circumference of the threaded unit with a 0.5 mm thick layer of the buffer unit. In an alternative embodiment not depicted in the drawings, the buffer unit extends along only one side of the threaded unit or along one side, and partly round the outer circumference, of the threaded unit. This makes it possible, according to an example not belonging to the invention, for a fastening element such as an adhesive to be used for fastening the buffer unit and the threaded unit to one another. A fastening element may also be used in the other embodiments to strengthen the securing of the threaded unit to the buffer unit.

The transition for the threaded rod 5 between the hole 9 in the threaded unit 7 and the hole 10 in the buffer unit 8 may be facilitated by the buffer unit being provided with a chamfer 11 (Fig. 4B) between the hole 9 and the hole 10. The chamfer may be between 25 and 75°, e.g. 45°. The chamfer 11 is only depicted in Fig. 4B but may also appear in the embodiment in Fig. 4C or other embodiments which are not depicted.

In one embodiment the buffer unit 8 is made of rubber, e.g. vulcanised rubber. The buffer unit may have a circular or oval external cross-section, or alternatively an angular cross-section to facilitate gripping by hand. In one embodiment the threaded unit 7 is made of metal, e.g. steel or copper. It may also be provided with a coating, e.g. zinc. The threaded unit may for example take the form of a nut, plate, screwplate or nutplate. The threaded unit may have a circular or oval external cross-section, or alternatively an angular external cross-section.

Making the insulator according to the invention involves the threaded unit 7 being embedded in the buffer unit 8 by vulcanising, in which case the buffer unit will be stable in shape but still be elastic.

The present invention is not restricted to the embodiments described above. Sundry alternatives, modifications and equivalents may be used. The aforesaid embodiments therefore do not limit the invention's scope, which is defined by the attached claims.

## Claims

1. An insulator (4) comprising a threaded unit (7) which has running through it a hole (9) with a diameter d₁ intended to accommodate a corresponding threaded rod (5), **characterised in that** the insulator (4) comprises also a buffer unit (8) made of elastic material and having at one end a hole (10) with a diameter d₂, which buffer unit (8) is secured to the threaded unit (7) so that the threaded hole (9) running through the unit and the hole (10) in the buffer unit are connected, the diameter d₂ of the hole in the buffer unit (8) being 1-4 mm smaller than the diameter d₁ of the hole in the threaded unit (7), thereby allowing a threaded rod (5) which is screwed through the hole (9) of the threaded unit (7) to further be threaded into the hole (10) of the buffer unit (8), in which the buffer unit (8) at least partly runs over the outer circumference of the threaded unit (7), wherein the threaded unit (7) is embedded in the buffer unit (8) by vulcanising, and the insulator (4) is arranged to serve as a thread locking mechanism for the threaded rod (5).

2. The insulator (4) according to claim 1, in which the hole (10) in the buffer unit and the threaded hole (9) running through the threaded unit are concentric.

3. The insulator (4) according to any one of the foregoing claims, in which the hole (10) runs all the way through the buffer unit.

4. The insulator (4) according to any one of the foregoing claims, in which the buffer unit (8) is made of rubber.

5. The insulator (4) according to claim 4, in which the buffer unit (8) is made of vulcanised rubber.

6. The insulator (4) according to any one of the foregoing claims, in which the threaded unit (7) is made of metal.

7. The insulator (4) according to any one of the foregoing claims, in which the threaded unit (7) has a circular cross-section.

8. The insulator (4) according to any one of the foregoing claims, in which the buffer unit (8) has a circular cross-section.

9. The insulator (4) according to any of the foregoing claims, in which the threaded unit (7) is a nut.

## Patentansprüche

1. Isolator (4), der eine mit einem Gewinde versehene Einheit (7) umfasst, die durch sie verlaufend ein Loch (9) mit einem Durchmesser d₁ aufweist, das dazu vorgesehen ist, eine entsprechende mit einem Gewinde versehene Stange (5) unterzubringen, **dadurch gekennzeichnet, dass** der Isolator (4) außerdem eine Puffereinheit (8) umfasst, die aus elastischem Material hergestellt ist und an einem Ende ein Loch (10) mit einem Durchmesser d₂ aufweist, wobei diese Puffereinheit (8) an der mit einem Gewinde versehenen Einheit (7) so gesichert ist, dass das mit einem Gewinde versehene Loch (9), das durch die Einheit verläuft, und das Loch (10) in der Puffereinheit verbunden sind, wobei der Durchmesser d₂ des Lochs in der Puffereinheit (8) um 1 - 4 mm kleiner als der Durchmesser d₁ des Lochs in der mit einem Gewinde versehenen Einheit (7) ist, wodurch ermöglicht wird, dass eine mit einem Gewinde versehene Stange (5), die durch das Loch (9) der mit einem Gewinde versehenen Einheit (7) geschraubt wird, weiter in das Loch (10) der Puffereinheit (8) geschraubt werden kann, wobei die Puffereinheit (8) zumindest zum Teil über den Außenumfang der mit einem Gewinde versehenen Einheit (7) verläuft, wobei die mit einem Gewinde versehene Einheit (7) durch Vulkanisieren in die Puffereinheit (8) eingebettet wird und der Isolator (4) dazu eingerichtet ist, als ein Gewindearretiermechanismus für die mit einem Gewinde versehene Stange (5) zu dienen.

2. Isolator (4) nach Anspruch 1, wobei das Loch (10) in der Puffereinheit und das mit einem Gewinde versehene Loch (9), das durch die mit einem Gewinde versehene Einheit verläuft, konzentrisch sind.

3. Isolator (4) nach einem der vorstehenden Ansprüche, wobei das Loch (10) durch die gesamte Puffereinheit verläuft.

4. Isolator (4) nach einem der vorstehenden Ansprüche, wobei die Puffereinheit (8) aus Kautschuk hergestellt ist.

5. Isolator (4) nach Anspruch 4, wobei die Puffereinheit (8) aus vulkanisiertem Kautschuk hergestellt ist.

6. Isolator (4) nach einem der vorstehenden Ansprüche, wobei die mit einem Gewinde versehene Einheit (7) aus Metall hergestellt ist.

7. Isolator (4) nach einem der vorstehenden Ansprüche, wobei die mit einem Gewinde versehene Einheit (7) einen kreisförmigen Querschnitt aufweist.

8. Isolator (4) nach einem der vorstehenden Ansprüche, wobei die Puffereinheit (8) einen kreisförmigen Querschnitt aufweist.

9. Isolator (4) nach einem der vorstehenden Ansprüche, wobei die mit einem Gewinde versehene Einheit (7) eine Mutter ist.

## Revendications

1. Isolateur (4) comprenant une unité filetée (7) traversée par un trou (9) d'un diamètre di destiné à recevoir une tige filetée (5) correspondante, **caractérisé en ce que** l'isolateur (4) comprend également une unité tampon (8) en matériau élastique et ayant à une extrémité, un trou (10) d'un diamètre d₂, laquelle unité tampon (8) étant fixée sur l'unité filetée (7) de sorte que le trou fileté (9) traversant l'unité et le trou (10) dans l'unité tampon soient raccordés, le diamètre d₂ du trou de l'unité tampon (8) étant plus petit de 1 à 4 mm que le diamètre d₁ du trou dans l'unité filetée (7), permettant ainsi à une tige filetée (5) qui est vissée à travers le trou (9) de l'unité filetée (7) d'être filetée davantage dans le trou (10) de l'unité tampon (8), l'unité tampon (8) s'étendant au moins partiellement sur la circonférence externe de l'unité filetée (7), l'unité filetée (7) étant noyée dans l'unité tampon (8) par vulcanisation, et l'isolateur (4) étant conçu pour servir comme mécanisme de verrouillage de fil pour la tige filetée (5) .

2. Isolateur (4) selon la revendication 1, dans lequel le trou (10) dans l'unité tampon et le trou fileté (9) traversant l'unité filetée sont concentriques.

3. Isolateur (4) selon l'une quelconque des revendications précédentes, dans lequel le trou (10) traverse entièrement l'unité tampon.

4. Isolateur (4) selon l'une quelconque des revendications précédentes, dans lequel l'unité tampon (8) est constituée de caoutchouc.

5. Isolateur (4) selon la revendication 4, dans lequel l'unité tampon (8) est constituée de caoutchouc vulcanisé.

6. Isolateur (4) selon l'une quelconque des revendications précédentes, dans lequel l'unité filetée (7) est constituée de métal.

7. Isolateur (4) selon l'une quelconque des revendications précédentes, dans lequel l'unité filetée (7) présente une section transversale circulaire.

8. Isolateur (4) selon l'une quelconque des revendications précédentes, dans lequel l'unité tampon (8) présente une section transversale circulaire.

9. Isolateur (4) selon l'une quelconque des revendications précédentes, dans lequel l'unité fileté (7) est un écrou.
